# EUROPEAN PATENT SPECIFICATION

(11) **EP 1 141 608 B1**
(45) Date of publication and mention of the grant of the patent: **13.10.2004**
(21) Application number: 99960053.9
(22) Date of filing: 15.12.1999
(51) Int. Cl.: F16L 21/00, F16L 47/02

(54) **METHOD FOR MANUFACTURING AN ARRANGEMENT FOR CONNECTING DOUBLE-SHELLED PLASTIC PIPES**
VERFAHREN ZUM HERSTELLEN EINER ANORDNUNG ZUR VERBINDUNG VON DOPPELWANDIGEN KUNSTSTOFFROHREN
PROCEDE DE FABRICATION D'UN ARRANGEMENT POUR LE RACCORDEMENT DE TUYAUX EN PLASTIQUE A DOUBLE PAROI

(30) Priority: 17.12.1998 NO 985948
(43) Date of publication of application: 10.10.2001
(73) Proprietor: Pipelife Norge AS, 1566 Surnadal (NO)
(72) Inventor: MAUTE, Kurt, Per, N-7125 Vanvikan (NO)
(74) Representative: Dealtry, Brian
(86) International application number: PCT/NO1999/000381
(87) International publication number: WO 2000/036325

(56) References cited:
- EP-A1- 0 789 176
- EP-A2- 0 385 465
- DE-A1- 4 432 199
- US-A- 5 071 173

## Description

The present invention relates to a method for manufacturing an arrangement for connecting double-walled plastics pipes, also called lightweight pipes, according to the preamble of patent claim 1.

### Background

The walls of lightweight pipes are characterized by having special constructions to save weight without a loss in the rigidity of the pipe. Such pipes can be produced with solid wall ends, that may be hot formed into corresponding spigot end and socket, which can be joined by using a sealing ring. Alternatively, a sealing ring placed in a groove in the double-walled part of the pipe wall, and a special socket sleeve, may be used. This socket sleeve may be friction welded to the end of the double-walled pipe against the two outermost corrugation tops.

In some cases, it is desirable with a smooth spigot end, integrated with a lightweight pipe on one end, and a simple socket sleeve with a groove for a sealing ring, integrated with the lightweight pipe on the other end. In the European patent, publication number 0 385 465 B1, such a solution is described, where the lightweight pipe itself is a double-walled pipe (DW-pipe) of the same fundamental construction as described above. The characterizing part of the solution described in said European patent publication, is that the manufacturing line of the DW-pipe itself, comprising an extruder with tools and a corrugation machine coupled behind, at regular intervals produces a piece of pipe which is smooth both inside and outside, and that this smooth piece of pipe is given the same diameter as the interior cylindrical surface of the double-walled pipe. The smooth piece of pipe is then cut at about the middle of the length. After cutting, one end will often be chamfered. In this way a so-called "spigot end" is achieved.

The other cut piece of the smooth pipe-section must then be hot formed into a socket sleeve for the purpose of coupling the spigot end into such a socket sleeve. The socket sleeve itself and associated sealing ring-groove are provided by known methods, such as hot forming of socket sleeves on pipes of thermoplastic materials which are smooth both inside and outside.

The principle which is described in European patent publication 0 385 465 B1, has several practical drawbacks and restrictions. One problem is to achieve sufficiently large wall thickness in the smooth pipe piece, so that sufficiently large wall thickness in the spigot end and at the socket sleeve with its sealing ring groove, may be achieved.

In practical manufacturing it is desirable to keep the weight of a DW-pipe as low as possible - this is the intended purpose of a DW-pipe. In principle, a DW-pipe consists of two pipe formed material layers which are concentric with each other, where the inner layer constitutes the inner part of the pipe profile, with a certain thickness, while the outer part, by special forming technology, will give the outward corrugations and will, after forming, result in the same or another wall thickness, on top of the corrugation.

In the "valley" between two corrugations, the two layers of material are fused together to one layer, and will therefore have a thickness which is about the sum of the two individual layers, however, in practice it is often a little less than this sum, because the steel forming blocks in the corrugation machine, which form the corrugations from the outside, often press the layers together slightly in this "valley".

With known technology for manufacturing of DW-pipes, it is hard to achieve sufficiently large wall thickness in the smooth piece of pipe. This is because the speed of the part of the corrugation machine which shall form the smooth piece of pipe, must be reduced substantially, compared to the speed of the extruder which extrudes the two concentric material layers, which again is the basis for the interior and exterior walls of the DW-pipe.

This speed-reduction in the corrugation machine, is necessary because the sum of the thickness of the material-layers, which gives the actual profile of the DW-pipe, otherwise will be far from sufficient to achieve the intended wall thickness, so that the walls of the spigot end and the socket sleeve with the ring groove, will become sufficiently large.

During manufacturing of DW-pipes, there will be air at overpressure between the two said material layers, which are to be formed according to the wall profile of the DW-pipe.

Before the two material layers can be fused to one piece of pipe, the air between the layers must be evacuated. This results in a pressure-change from an overpressure of 0,4 - 0,5 bar to vacuum. If this change happens too fast the inner layer will collapse and the process will be seriously disrupted or even completely destroyed.

During the formation of the smooth piece, the speed of the corrugation machine must be substantially reduced, as mentioned, in order to achieve sufficient wall thickness. Normally this will at least result in the normal speed of the machine line for manufacturing of the double-walled pipe being reduced. This gives less favourable manufacturing economy.

Another problem is that the smooth pipe piece, due to the principal construction of the corrugation machine, is to be formed from two sets of semi-bowled external steel forming blocks, which by way of known technology, closes together externally against the piece of pipe, and form the exterior surface of the pipe in the same way as other forming blocks form the exterior corrugations.

In practice, two longitudinal parting lines externally of the pipe piece will always appear, where the two sets of forming blocks close together externally on the piece of pipe. These parting lines will be worse as the machine gets exposed to wear, and thereby in practice leakages in the plastics piping system will easily arise, because the sealing ring, which is to be placed in the sealing ring groove, will not seal sufficiently against the external surface of the spigot end, where the parting lines are appearing.

Leakages in plastics piping systems which are buried in the ground may cause disastrous economical consequences for the supplier of the pipe.

Another problem with the construction and manufacturing principles according to the European patent publication described above, particularly where the double-walled pipes are made of polyolefine plastics (polyethylene or polypropylene), is that such plastics are very difficult to form by means of hot forming. Therefore it will be very difficult to form the socket sleeve with its sealing ring groove sufficiently accurate by means of such hot forming, which is assumed according to said patent publication. The hot forming process have to occur upon reheating of the relevant part of the pipe element, and thereafter expansion of this part of the piece of pipe, towards an exterior forming unit. The expansion may occur as an expanding mandrel or rubberlung inside about half of the pipe piece expands, and presses the re-heated plastics material against the exterior forming unit, which thereby forms the exterior surfaces of the sleeve. When the socket sleeve with sealing ring groove thus are calibrated outwards, the interior tolerances of socket sleeve and sealing ring groove, which is determinant for tightness of the joints which are to be made, often not will become sufficiently accurate.

### Object

The main object of the present invention is to create an arrangement whereby double-walled pipes may be manufactured and joined without the disadvantages described above. It is the object at the arrangement to get an internally smooth joint with an integrated pushfit socket with sealing ring on one end of the pipe, and a spigot end which is smooth both inside and outside, on the other end of the pipe, said spigot end having the same inner diameter as the double-walled pipe. It is also desirable to use the spigot end in connection with standard fittings (e.g. bends and branches).

### The invention

According to the present invention, the object can be achieved by means of a method of manufacturing an arrangement according to patent claim 1.

The advantages of such a method will be explained by the following description of a preferred example. When the object is to produce a double-walled pipe which is smooth inside and corrugated outside, with an integrated pushfit socket sleeve with a sealing ring on one end of the pipe, and a spigot which is smooth inside and outside on the other end of the pipe, and has the same internal diameter as the double-walled pipe, then the present invention will solve the problems associated with the prior art.

Further features of the invention will appear from dependant patent claims 2-4.

### Examples

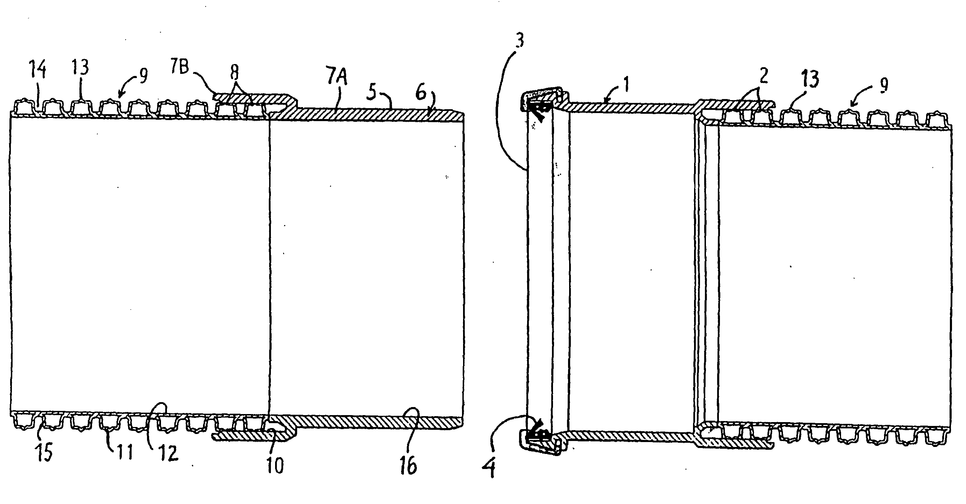

The present invention is described further below, with reference to the figure, which shows an axial section through a pipe joint of a double-walled pipe, produced according to the present invention.

The figure shows a socket-sleeve component 1, which is previously injection-moulded, and thereafter friction welded to the end of the DW-pipe, at the two outermost corrugation tops at 2.

The socket-sleeve component I has a sealing ring 4 in the sleeve at the socket end 3, which is to seal upon joining, against exterior surface 5 of the spigot component 6 which is designed and arranged according to the invention.

To mate the socket sleeve component 1, the spigot-component 6 is formed, which is comprised of a spigot-part 7A and an integrated sleeve-part 7B.

All of the assembled spigot-component 6 with the two parts 7A and 7B are, as also the socket-sleeve component 1, previously moulded. Injection moulding provides a more precise surface and better tolerances than the process which are provided in the mentioned European patent publication. The product and method according to the present invention, will therefore not have the drawbacks related to longitudinal parting lines as on the spigot end described above, or inaccurate tolerances at the surfaces, which are important for the sealing effect of the joint ring.

The spigot-component 6 is friction welded to the two outermost corrugation tops of the double-walled pipe at 8, on the end of the pipe opposite to the socket end. Such friction welding is performed by so-called "rotation welding" where the spigot-component 6 is rotated fast in relation to the DW-pipe 9. The interior cylindrical part 10 of the spigot-component 6 which is to be friction welded to the corrugation tops on the DW-pipe 9 at 8, has a diameter which is somewhat smaller than the corrugation tops 11 before the friction welding is performed. Thereby friction heat arises in the welding zone at the corrugation tops 8 so that the plastics, both at pipe 9 and spigot component 6, melts at this location. A so-called "friction weld" is therefore achieved at this location, and the spigot component is integrated onto the double-walled pipe 9.

Wall thickness and geometry of a spigot-component 6, produced by injection moulding, are completely independent of the manufacturing process which forms the double-walled lightweight pipe 9.

The DW-pipe 9 itself, can therefore be manufactured undisturbed with optimal manufactured speed, and it is not necessary to increase the wall thickness of the two material layers, constituting the pipe, beyond what is needed to give the DW-pipe the ring stiffness it should have, and which is mainly given by the wall thicknesses at 12 (inner part of the DW-pipe), 13 (the top of the corrugation of the DW-pipe), 14 (the thickness of the DW-pipe in the "valleys"), 15 (the side flanks of the corrugations), and the inner and outer diameter of the DW-pipe. The interior cylindrical surface of the spigot-component is referred to by the reference number 16.

The solution shown in the figure, may also be dimensioned so that outer diameter at 5 of the spigot part 7A, fit so that the spigot end could be used for joining to sockets on standard fittings (e.g. pipe bends and branches pipes).

The thickness of the spigot end may be dimensioned totally independent of the manufacturing process for the DW-pipe itself, and will thus have no consequence concerning the manufacturing parameters of the pipe. This is very important because the DW-pipe can then be produced at optimal manufacturing speed, and with so high weight reduction as possible compared to normal smooth pipes with compact pipe-walls.

It is also of great importance, that the invention makes it possible to produce DW-pipes with an integrated socket and spigot end, having the same high quality with regard to geometrical shape, tolerances and material related aspects, as socket and spigot ends of approved, standard injection moulded pipe fittings which have been common on the market for several years.

## Claims

1. A method of manufacturing an arrangement for connecting double-walled plastics pipes (9) having a smooth inner pipe (12) and a corrugated outer pipe (13) integrated with the inner pipe, the arrangement including a socket-sleeve (1) having an inner surface arranged for holding a pipe-end, and a separately produced spigot component (6) having a first spigot forming part (7A) which is smooth inside and outside for insertion in the socket-sleeve (1) and an adjacent integrated sleeve forming part (7B) with an inside (10), the method including the steps of fastening the socket-sleeve (1) to a pipe-end of the outer pipe (13) of one said plastics pipe (9), and mating the inside (10) of the integrated sleeve forming part (7B) of the spigot component (6) to the outside of another said plastics pipe (9), said method being **characterised in that** it includes the step of tightly fastening the integrated sleeve forming part (7B) to the outside of the other said plastics pipe (9) by means of rotation welding.

2. A method according to Claim 1 wherein the socket-sleeve (1) is fastened to the pipe-end of the outer pipe (13) of the one said plastics pipe (9) by means of rotation welding.

3. A method according to Claim 1 or Claim 2 wherein the spigot forming part (7A) of the separately produced spigot component (6) has an outer diameter corresponding to the outer diameters of spigot ends of standard pipe fittings.

4. A method according to any preceding claim wherein the spigot forming part (7A) of the separately produced spigot component (6) has an internal diameter (16) corresponding to the internal diameter of the plastics pipe (9).

5. A method according to any preceding claim wherein the socket-sleeve (1) is provided at the its free ends with an inward flange to receive a sealing ring (4).

## Patentansprüche

1. Verfahren zur Herstellung einer Anordnung zum Verbinden doppelwandiger Kunsstoffrohre (9) mit einem glatten Innenrohr (12) und einem gewellten bzw. geriffelten, mit dem Innenrohr integrierten Außenrohr (13), wobei die Anordnung eine Muffe-Hülse (1) mit einer zum Halten eines Rohrendes angeordneten Innenfläche sowie eine getrennt hergestellte Zapfenkomponente (6) mit einem ersten, einen Zapfen bildenden Teil (7A), der innen und außen zum Einsetzen in die Muffe-Hülse (1) glatt ist, und einem angrenzenden integrierten, eine Hülse bzw. Muffe bildenden Teil (7B) mit einer Innenseite (10) aufweist, wobei das Verfahren die Schritte des Befestigens der Muffe-Hülse (1) an einem Rohrende des Außenrohrs (13) eines der Kunststoffrohre (9) und des Zusammenfügens der Innenseite (10) des integrierten, eine Hülse bzw. Muffe bildenden Teils (7B) der Zapfenkomponente (6) mit der Außenseite eines anderen Kunststoffrohrs (9) umfasst, und das Verfahren **dadurch gekennzeichnet ist, dass** es den Schritt des festen Befestigens des integrierten, eine Hülse bzw. Muffe bildenden Teils (7B) an der Außenseite des anderen Kunststoffrohrs (9) mittels Rotationgschweißen umfasst.

2. Verfahren nach Anspruch 1, wobei die Muffe-Hülse (1) an dem Rohrende des Außenrohre (13) des einen Kunststoffrohrs (9) mittels Rotationsschweißen befestigt wird.

3. Verfahren nach einem der Ansprüche 1 oder 2, wobei das einen Zapfen bildende Teil (7A) der separat hergestellten Zapfenkomponente (6) einen Außendurchmesser hat, der den Außendurchmessern von Zapfenenden von Standard-Rohrfittings entspricht.

4. Verfahren nach einem der vorangehenden Ansprüche, wobei das einen Zapfen bildende Teil (7A) der separat hergestellten Zapfenkomponente (6) einen Innendurchmesser (16) hat, der dem Innendurchmesser des Kunststoffrohrs (9) entspricht.

5. Verfahren nach einem der vorangehenden Ansprüche, wobei die Muffe-Hülse (1) an ihren freien Enden mit einem nach innen gerichteten Flansch zum Aufnehmen eines Dichtungsrings (4) versehen ist.

## Revendications

1. Procédé de fabrication d'un aménagement pour raccorder des tuyaux en matière plastique à double paroi (9) comprenant un tuyau interne lisse (12) et un tuyau externe ondulé (13) incorporé au tuyau interne, l'aménagement comprenant un manchon de raccordement (1) comportant une surface interne aménagée de manière à maintenir une extrémité de tuyau, et un composant à emboîtement fabriqué séparément (6) comprenant une première partie formant un emboîtement (7A) qui est lisse à l'intérieur et à l'extérieur afin de permettre une introduction dans le manchon de raccordement (1) et une partie adjacente formant un manchon intégré (7B) comportant un côté intérieur (10), le procédé comprenant les étapes de fixation du manchon de raccordement (1) à une extrémité de tuyau du tuyau externe (13) de l'un desdits tuyaux en matière plastique (9), et d'adaptation du côté intérieur (10) de la partie formant un manchon intégré (7B) du composant à emboîtement (6) sur le côté extérieur de l'autre desdits tuyaux en matière plastique (9), ledit procédé étant **caractérisé en ce qu'**il comprend l'étape de fixation hermétique de la partie formant un manchon intégré (7B) sur le côté extérieur de l'autre desdits tuyaux en matière plastique (9) au moyen d'un soudage en rotation.

2. Procédé selon la revendication 1, dans lequel le manchon de raccordement (1) est fixé à l'extrémité de tuyau du tuyau externe (13) de l'un desdits tuyaux en matière plastique (9) au moyen d'un soudage en rotation.

3. Procédé selon la revendication 1 ou la revendication 2, dans lequel la partie formant un emboîtement (7A) du composant à emboîtement fabriqué séparément (6) a un diamètre externe qui correspond aux diamètres externes des extrémités d'emboîtement de raccords de tuyaux standard.

4. Procédé selon l'une quelconque des revendications précédentes, dans lequel la partie formant un emboîtement (7A) du composant à emboîtement fabriqué séparément (6) a un diamètre interne (16) qui correspond au diamètre interne du tuyau en matière plastique (9).

5. Procédé selon l'une quelconque des revendications précédentes, dans lequel le manchon de raccordement (1) comporte à son extrémité libre une bride dirigée vers l'intérieur destinée à recevoir un joint d'étanchéité (4).
